# EUROPEAN PATENT SPECIFICATION

(11) **EP 3 085 429 B1**
(45) Date of publication and mention of the grant of the patent: **26.09.2018**
(21) Application number: 16165489.2
(22) Date of filing: 15.04.2016
(51) Int. Cl.: B01D 53/04, H01M 8/0662

(54) **FUEL CELL SYSTEM PURIFYING APPARATUS**
REINIGUNGSVORRICHTUNG FÜR EIN BRENNSTOFFZELLENSYSTEM
APPAREIL DE PURIFICATION DE SYSTÈME DE PILE À COMBUSTIBLE

(30) Priority: 23.04.2015 JP 2015088306
(43) Date of publication of application: 26.10.2016
(73) Proprietor: AISIN SEIKI KABUSHIKI KAISHA, Kariya-shi, Aichi 448-8650 (JP)
(72) Inventor: OSADA, Kosuke, Kariya-shi, Aichi 448-8650 (JP)
(74) Representative: TBK

(56) References cited:
- EP-A1- 2 479 828
- WO-A2-2010/026875

## Description

### TECHNICAL FIELD

This disclosure relates to a fuel cell system purifying apparatus that purifies a gaseous fluid or a liquid phase fluid.

### BACKGROUND DISCUSSION

In a fuel cell system purifying apparatus, for example, it is desired to rectify a flow of a fluid such as a gaseous fuel or condensed water which is purified by a purifying agent so that the fluid can pass through the fuel cell system purifying apparatus while being in contact with the purifying agent. Therefore, in an inner portion of a container which is an accommodation chamber accommodating the purifying agent, a plurality of partition plates are disposed, or a box-shaped partition member having a partition wall is fixed thereto by bonding. Thereby, since the inner portion of the fuel cell system purifying apparatus is partitioned by the partition plate or the partition wall, the fluid which is purified by the purifying agent is prevented from directly flowing through the inner portion thereof, and a purifying path through which the fluid flows rectifies the flow of the fluid by being formed so as to be bent.

Examples of the related art include JP 2007-273142A, JP 2012-133911A, and EP 2 479 828 A1. Fig. 6 of EP 2 479 828 A1 discloses a container for a fuel cell system purifying apparatus having the features set forth in the preamble of claim 1.

However, in such a fuel cell system purifying apparatus, since there is a need to dispose a partition plate or a partition member which is a separate member from the container accommodating the purifying agent, the number of components is increased.

### SUMMARY

Thus, a need exists for a fuel cell system purifying apparatus that can rectify a flow of a fluid which is purified by a purifying agent without increasing the number of components.

A fuel cell system purifying apparatus according to the present invention includes the features set forth in claim 1.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a diagram illustrating a fuel cell system according to an embodiment disclosed here;
Fig. 2 is a plan view illustrating a desulfurizer in the embodiment disclosed here;
Fig. 3 is a sectional view taken along III-III line in Fig. 2;
Fig. 4 is a plan view of a first casing in the desulfurizer illustrated in Fig. 2;
Fig. 5 is a plan view illustrating an example of a second casing in the desulfurizer illustrated in Fig. 2;
Fig. 6 is a plan view illustrating another example of the second casing; and
Fig. 7 is a sectional view similar to Fig. 3 illustrating a case where the second casing illustrated in Fig. 6 is used.

### DETAILED DESCRIPTION

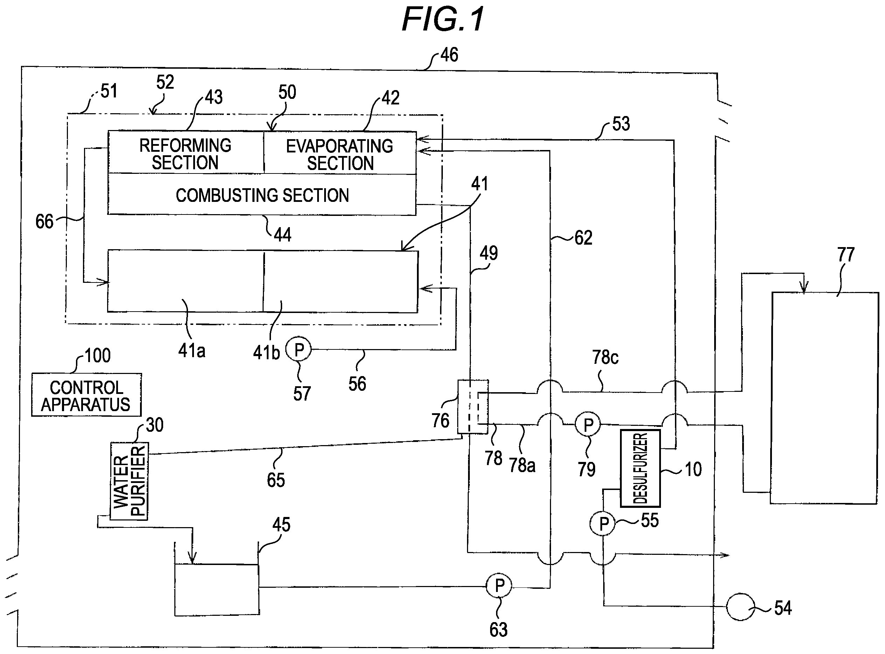

Hereinafter, an embodiment of a fuel cell system to which a fuel cell system purifying apparatus disclosed here is applied will be described with reference to the drawings. As illustrated in Fig. 1, the fuel cell system includes a fuel cell 41, an evaporating section 42 that generates water vapor by evaporating liquid phase water, a reforming section 43 that reforms the fuel by using the water vapor generated by the evaporating section 42, and forms anode gas, a combusting section 44 that heats the evaporating section 42 and the reforming section 43, a tank 45 that collects the liquid phase water supplied to the evaporating section 42, and a housing 46 that accommodates the components.

The fuel cell 41 includes an anode 41a, and a cathode 41b which interpose an ion conductor between the anode 41a and the cathode 41b, and for example, a solid oxide fuel cell also referred to as SOFC (operating temperature: for example, 400°C or higher) may be applied as the fuel cell 41. The anode exhaust gas which is discharged from the anode 41a side is supplied to the combusting section 44. The cathode exhaust gas which is discharged from the cathode 41b side is supplied to the combusting section 44. The combusting section 44 heats the evaporating section 42, and the reforming section 43 by combusting the anode exhaust gas and the cathode exhaust gas. The gas after the combustion in the combusting section 44, and the combustion exhaust gas containing the non-combustion gas are released to an atmosphere through an exhaust gas path 49.

The reforming section 43 is formed by a carrier such as ceramic which carries a reforming catalyst, and is disposed to be adjacent to the evaporating section 42. The reforming section 43, and the evaporating section 42 configure a reformer 50, and the reformer 50 and the fuel cell 41 are surrounded by a heat insulating wall 51, and form a power generation module 52. At the time of power generation operation, the reformer 50 is heated within the heat insulating wall 51 so as to be suitable for a reforming reaction. At the time of the power generation operation, the evaporating section 42 is heated so as to make the water vapor by heating the water.

A fuel path 53 is a path for supplying the fuel from a fuel source 54 to the reformer 50, and is provided with a fuel pump 55 and a desulfurizer 10 (which is equivalent to a fuel cell system purifying apparatus). A cathode gas path 56 for supplying the cathode gas (air) to the cathode 41b is connected to the cathode 41b of the fuel cell 41. A cathode pump 57 functioning as an air transport source for cathode gas transport is disposed in the cathode gas path 56.

As illustrated in Fig. 1, the water which is collected within the tank 45 passes through a water supply path 62 by an operation of a pump 63, and is supplied to the evaporating section 42.

At the time of startup of the fuel cell system, if the fuel pump 55 is driven, the fuel from the fuel path 53 passes through the desulfurizer 10, and flows to the combusting section 44 through the evaporating section 42, the reforming section 43, an anode gas path 66, and the anode 41a of the fuel cell 41. Since the desulfurizer 10 accommodates a desulfurizing agent such as zeolite or activated charcoal having a desulfurization function as a purifying agent, impurities such as odorants in the fuel from the fuel source 54 are removed by the desulfurizer 10. The fuel from which the impurities are removed passes through the fuel path 53, and is sent to the evaporating section 42.

The cathode gas (air) flows to the combusting section 44 through the cathode gas path 56, and the cathode 41b by the cathode pump 57. If the combusting section 44 is ignited in this state, the combustion occurs in the combusting section 44, and the reforming section 43 and the evaporating section 42 are heated. In this manner, if the pump 63 is driven, in a state where the reforming section 43 and the evaporating section 42 are heated, the water within the tank 45 is transported through the water supply path 62 toward the evaporating section 42 from the tank 45, and transitions into the water vapor by being heated by the evaporating section 42. The water vapor is moved to the reforming section 43 along with the fuel supplied from the fuel path 53. In the reforming section 43, the fuel transitions into the anode gas (gas containing hydrogens) by being reformed in the water vapor. The anode gas is supplied to the anode 41a of the fuel cell 41 through the anode gas path 66. Furthermore, the cathode gas (gas containing oxygens, air within the housing 46) is supplied to the cathode 41b of the fuel cell 41 through the cathode gas path 56. Thereby, the fuel cell 41 generates the power. The off-gas of the anode gas discharged from the anode 41a, and the off-gas of the cathode gas discharged from the cathode 41b reach the combusting section 44, and are combusted by the combusting section 44. The exhaust gas of a high temperature is discharged to the outside of the housing 46 through the exhaust gas path 49.

In the exhaust gas path 49, a heat exchanger 76 having a condensation function is disposed. A hot water storage path 78, and a hot water storage pump 79 which are connected to a hot water storage bath 77 are disposed. The hot water storage path 78 includes a forward path 78a, and a backward path 78c. By the driving of the hot water storage pump 79, the water of a low temperature in the hot water storage bath 77 passes through the forward path 78a by being ejected from the hot water storage bath 77, reaches the heat exchanger 76, and is heated by a heat exchange action of the heat exchanger 76. The water heated by the heat exchanger 76 is returned to the hot water storage bath 77 through the backward path 78c. In this manner, the water in the hot water storage bath 77 becomes the warm water. The water vapor which is contained in the exhaust gas described above becomes condensed water by being condensed with the heat exchanger 76. The condensed water is supplied to a water purifier 30 (which is equivalent to the fuel cell system purifying apparatus) by gravity or the like through a condensed water path 65 that is extended from the heat exchanger 76.

Since the water purifier 30 accommodates a water purification agent such as an ion exchange resin as a purifying agent 22, the impurities of the condensed water are removed by the water purifier 30. The water from which the Impurities are removed is moved to the tank 45, and is collected in the tank 45. A control apparatus 100 controls the pumps 55, 57, 63, and 79 through a motor driving the pumps 55, 57, 63, and 79.

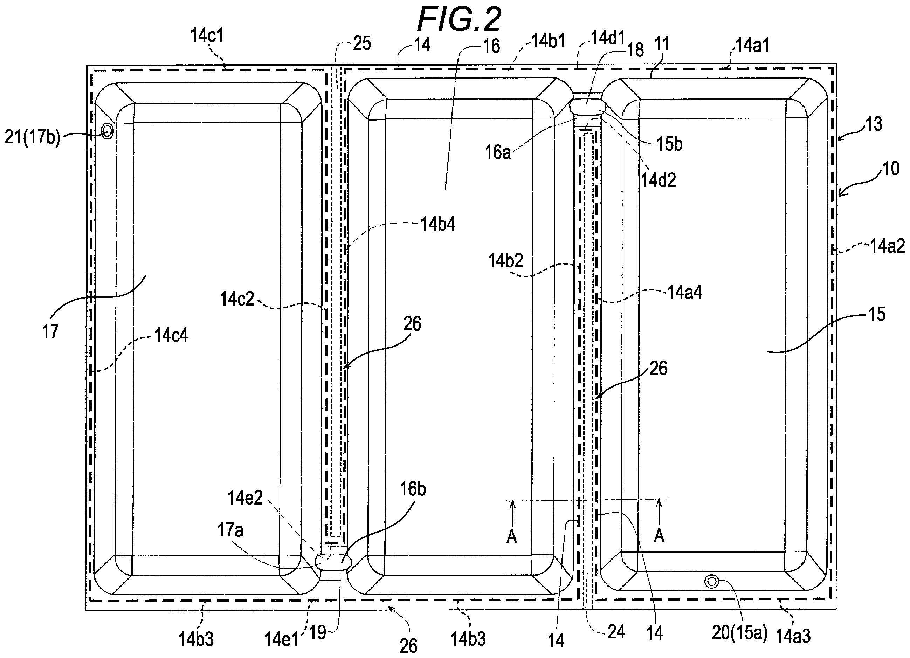

Fig. 2 illustrates the desulfurizer 10 (which is equivalent to the fuel cell system purifying apparatus) that is used in the fuel cell system. Regarding the desulfurizer 10, as illustrated in Fig. 2 to Fig. 5, for example, a first casing 11 made of metal such as stainless, which is three-dimensionally formed into a predetermined shape by press molding or the like, and a flat plate-shaped second casing 12 made of metal such as stainless are bonded to each other in a thickness direction, thereby forming a container 13. For example, it is possible to perform the bonding of the first casing 11 to the second casing 12 by the welding such as piercing welding using fiber laser welding, or the welding using heating at a high temperature. A bold dashed line of Fig. 2 indicates the welded section 14 where the first casing 11 and the second casing 12 are bonded to each other.

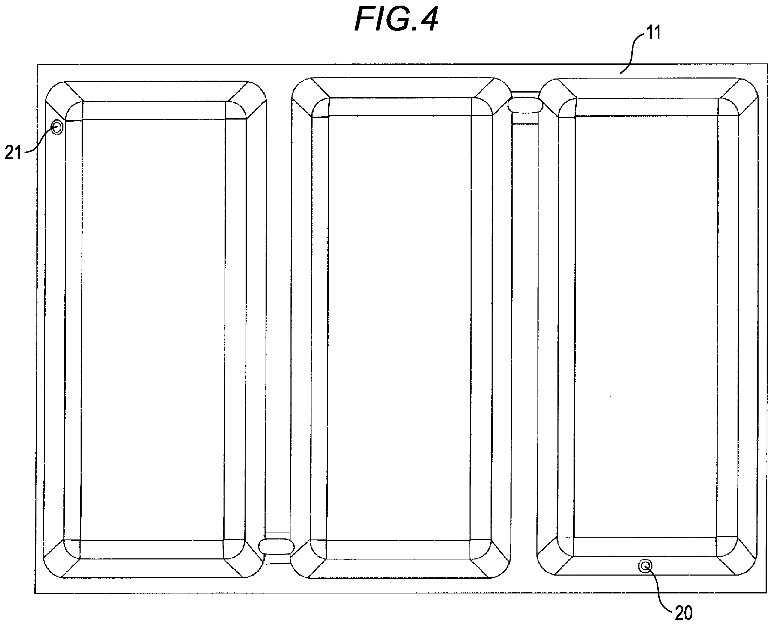

In an inner portion of the container 13 which is formed by the bonding of the first casing 11 to the second casing 12, three accommodation chambers 15, 16, and 17 which are separated from each other by the welded section 14 are formed. As illustrated in Fig. 2 and Fig. 4, a guide inlet 20 that guides the fuel being a gaseous fluid to which the odorant is added to flow into one end of the accommodation chamber 15 is disposed in the first casing 11. As illustrated in Fig. 2 and Fig. 4, a guide outlet 21 which guides the fluid to flow out from one end of the accommodation chamber 17 is disposed in the first casing 11. By the bonding of the first casing 11 to the second casing 12, a communicating section 18 through which the accommodation chamber 15 communicates with the accommodation chamber 16 is formed at the other end of the accommodation chamber 15 by being spaced from the guide inlet 20, in the inner portion of the container 13. Similarly, by the bonding of the first casing 11 to the second casing 12, a communicating section 19 through which the accommodation chamber 16 communicates with the accommodation chamber 17 is formed at the other end of the accommodation chamber 17 by being spaced from the guide outlet 21.

As illustrated in Fig. 2, the welded section 14 is continuously provided so as to surround the accommodation chambers 15, 16, and 17 and the communicating sections 18 and 19 along outer peripheries thereof, and the inner portion of the container 13 is air-tightly retained by the welded section 14. As illustrated in Fig. 2, the welded section 14 has portions 14a1, 14a2, 14a3, and 14a4 defining the accommodation chamber 15, portions 14b1, 14b2, 14b3, and 14b4 defining the accommodation chamber 16, portions 14c1, 14c2, 14c3, and 14c4 defining the accommodation chamber 17, portions 14d1 and 14d2 defining the communicating section 18, and portions 14e1 and 14e2 defining the communicating section 19, and the portions are configured to be connected to each other as illustrated in Fig. 2.

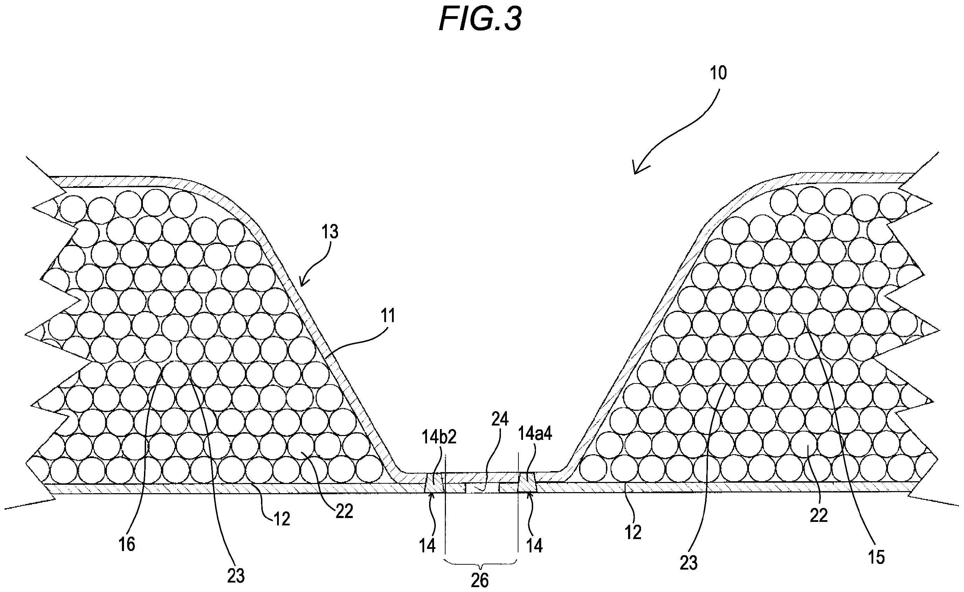

As illustrated in Fig. 3, it is preferable that the purifying agent 22 (for example, zeolite or activated charcoal having the desulfurization function) be accommodated in not only the accommodation chambers 15, 16, and 17 but also the communicating sections 18 and 19. Accordingly, in the inner portion of the container 13, a purifying path 23 reaching the guide outlet 21 sequentially through the accommodation chamber 15, the communicating section 18, the accommodation chamber 16, the communicating section 19, and the accommodation chamber 17 from the guide inlet 20, is configured by the first casing 11 and the second casing 12. The fuel to which the odorant is added flows through the purifying path 23, and thereby, is purified by being desulfurized by the purifying agent 22.

The purifying path 23 is configured to be arranged to pass from the accommodation chamber 15 through the communicating section 18 to the accommodation chamber 16, and to be arranged to pass from the accommodation chamber 16 through the communicating section 19 to the accommodation chamber 17. In this manner, the fuel flows through the purifying path 23 which passes through the accommodation chambers 15, 16, and 17 and the communicating sections 18 and 19, and thereby, a flow of the fuel is rectified.

As illustrated in Fig. 2, in the accommodation chamber 15, the guide inlet 20 being an inlet 15a of the purifying path 23 within the accommodation chamber 15 is disposed at one end of the accommodation chamber 15, and an outlet 15b of the purifying path 23 within the accommodation chamber 15 is disposed at the other end of the accommodation chamber 15. One end of the communicating section 18 is disposed at the outlet 15b. Since a length of the purifying path 23 in the accommodation chamber 15 may be prolonged up to a length of the accommodation chamber 15 and the fuel passes through the chamber while being in contact with the purifying agent 22 which is accommodated in the accommodation chamber 15, it is possible to effectively use the purifying agent 22.

As illustrated in Fig. 2, in the accommodation chamber 16, the other end of the communicating section 18 being an inlet 16a of the purifying path 23 within the accommodation chamber 16 is disposed at one end of the accommodation chamber 16, and an outlet 16b of the purifying path 23 within the accommodation chamber 16 is disposed at the other end of the accommodation chamber 16. One end of the communicating section 19 is disposed at the outlet 16b. Since the length of the purifying path 23 in the accommodation chamber 16 may be prolonged up to a length of the accommodation chamber 16 and the fuel passes through the chamber while being in contact with the purifying agent 22 which is accommodated in the accommodation chamber 16, it is possible to effectively use the purifying agent 22.

As illustrated in Fig. 2, in the accommodation chamber 17, the other end of the communicating section 19 being an inlet 17a of the purifying path 23 within the accommodation chamber 17 is disposed at one end of the accommodation chamber 17, and an outlet 17b of the purifying path 23 within the accommodation chamber 17 is disposed at the other end of the accommodation chamber 17. The guide outlet 21 is disposed at the outlet 17b. Since the length of the purifying path 23 in the accommodation chamber 17 may be prolonged up to a length of the accommodation chamber 17 and the fuel passes through the chamber while being in contact with the purifying agent 22 which is accommodated in the accommodation chamber 17, it is possible to effectively use the purifying agent 22.

A bonding section 26 indicates a portion that is positioned on the outside of the container 13 in comparison with the welded section 14 in a portion where the first casing 11 and the second casing 12 are bonded to each other by the welded section 14. The bonding section 26 is present along the entire periphery of the welded section 14, and is configured so as to be exposed to the atmosphere.

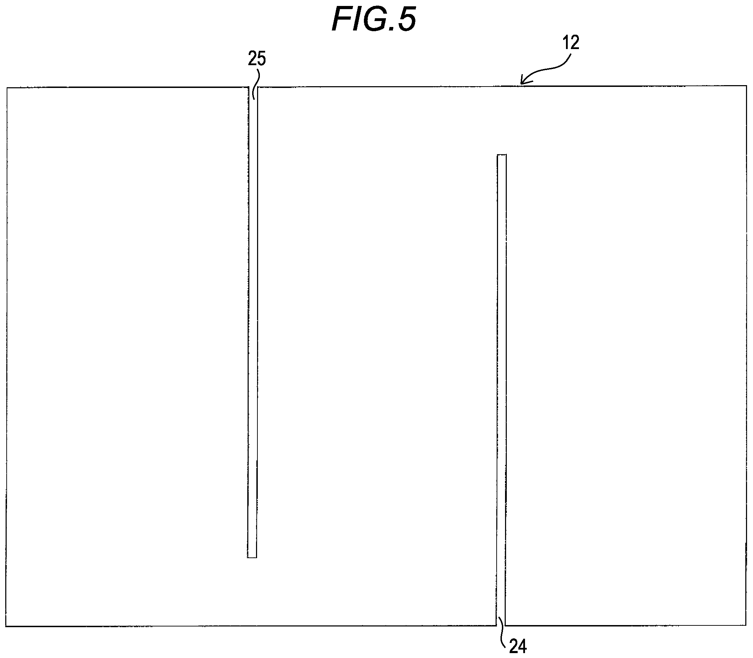

As illustrated in Fig. 5, in the second casing 12, notches 24 and 25 (which are equivalent to recessed sections) are formed by the press molding or the like. As illustrated in Fig. 2 and Fig. 3, since the notches 24 and 25 are disposed along the bonding section 26 that is positioned between the welded sections 14 of the accommodation chambers which are adjacent to each other, and penetrate the second casing 12 in the thickness direction of the second casing 12, and form a space directly facing the first casing 11, so that the notches 24 and 25 are exposed to the outside of the container 13.

Specifically, as illustrated in Fig. 2 and Fig. 3, the notch 24 is positioned in the bonding section 26 between the portion 14a4 defining the accommodation chamber 15 and the portion 14b2 defining the accommodation chamber 16, within the welded section 14, and is extended toward the portion 14d2 defining the communicating section 18 within the welded section 14 along the bonding section 26, that is, along the portions 14a4 and 14b2 of the welded section 14. As illustrated in Fig. 2, the notch 25 is positioned in the bonding section 26 between the portion 14b4 defining the accommodation chamber 16 and the portion 14c2 defining the accommodation chamber 17, within the welded section 14, and is extended toward the portion 14e2 defining the communicating section 19 within the welded section 14 along the bonding section 26, that is, along the portions 14b4 and 14c2 of the welded section 14. Thereby, it is possible to expose the bonding section 26 that is positioned between the portions defining the accommodation chambers which are adjacent to each other to the outside of the container 13 through the notches 24 and 25. In this manner, the accommodation chambers 15, 16, and 17 and the communicating sections 18 and 19 are formed by being separated from each other by bonding of the first casing 11 to the second casing 12, and the bonding section 26 that is formed by the welded section 14 continuously bonding the outer peripheries thereof to each other is configured to be exposed to the outside of the container 13 throughout the entire periphery of the bonding section 26 by the notches 24 and 25.

In the desulfurizer 10, since the bonding section 26 is configured to be exposed to the outside of the container 13 throughout the entire periphery of the bonding section 26 by the notches 24 and 25, it is possible to specify a spot of a bonding defect by a leakage test in the entire periphery of the welded section 14 including a portion of the bonding section 26 that is positioned in the portion defining the accommodation chambers which are adjacent to each other in the welded section 14. For example, the leakage test is performed in a well-known method. For example, the test is performed by blocking the guide outlet 21, causing a test gas to flow into the container 13 via the guide inlet 20, and applying a bulgingly transformable or rupturable film such as a soap film along the welded section 14 on the outside of the container 13.

The bonding of the first casing 11 to the second casing 12 will be described. The first casing 11 that is three-dimensionally formed into a predetermined shape is reversed, and the purifying agent 22 is preferably accommodated in not only the accommodation chambers 15, 16, and 17 but also a depressed portion which is equivalent to the communicating sections 18 and 19. Next, an upper side of the first casing 11 is covered with the second casing 12 where the notches 24 and 25 are formed, and the portions which become the outer peripheries of the accommodation chambers 15, 16, and 17 and the communicating sections 18 and 19 are continuously bonded to each other by fiber laser welding or the like, and the welded section 14 is formed, as illustrated in Fig. 2 and Fig. 3.

As a fuel cell system purifying apparatus, the desulfurizer 10 which is used in the fuel cell system is illustrated in the examples illustrated in Fig. 2 to Fig. 5, but the fuel cell system purifying apparatus is not limited thereto, and may be applied to the water purifier 30 which is used for the purifying of the condensed water in the fuel cell system. Since the water purifier 30 has the same structure as the desulfurizer 10 except for a point in which the water purification agent that promotes water purification by removing the impurities which are contained in the water, for example, the ion exchange resin is accommodated as a purifying agent 22, and the condensed water as a liquid phase fluid is supplied to the guide inlet 20 instead of the fuel being the gaseous fluid, the detailed description thereof will be omitted.

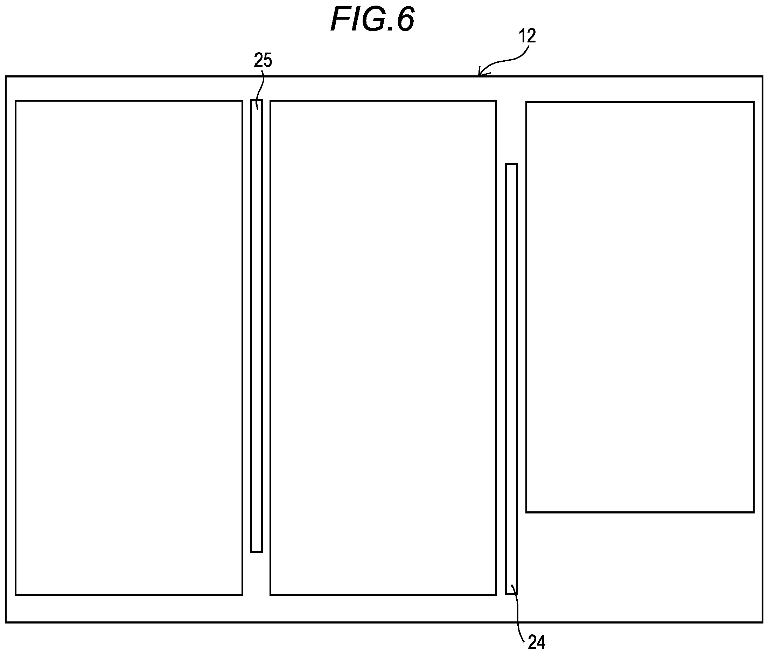

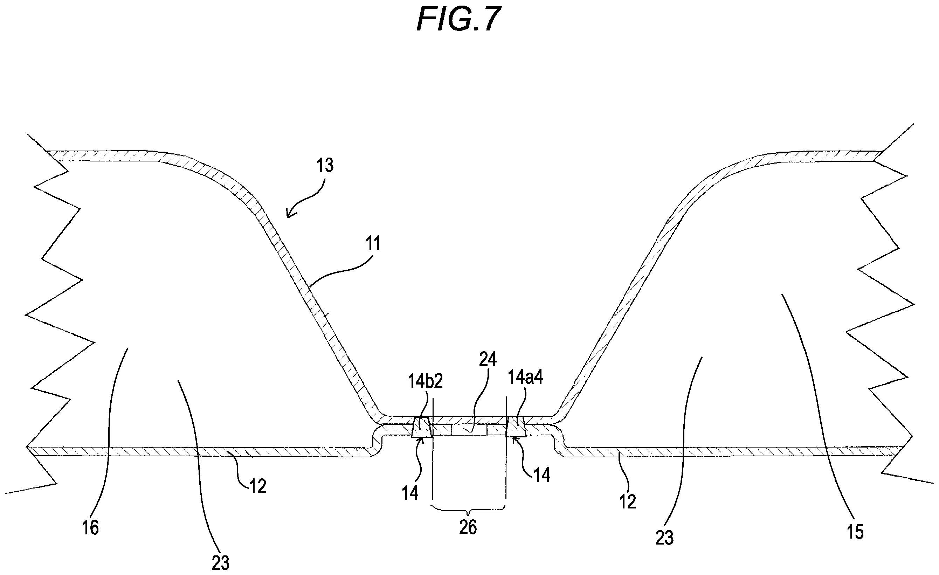

In the examples illustrated in Fig. 2 to Fig. 5, the fuel cell system purifying apparatus is illustrated as a fuel cell system purifying apparatus in which the container 13 is configured by bonding the first casing 11 which is three-dimensionally formed into a predetermined shape to the flat plate-shaped second casing 12. However, in the fuel cell system purifying apparatus, it is possible to three-dimensionally form the second casing 12 into a predetermined shape as illustrated in Fig. 6, instead of the flat plate-shaped second casing 12, and it is possible to configure the container 13 as illustrated in Fig. 7, by bonding the first casing 11 which is three-dimensionally formed into a predetermined shape to the second casing 12 which is three-dimensionally formed into a predetermined shape. Furthermore, In Fig. 7, the purifying agent 22 which is accommodated in the container 13 is omitted.

In the examples illustrated in Fig. 2 to Fig. 5, in the fuel cell system purifying apparatus, the notches 24 and 25 are configured so that one end thereof in a longitudinal direction is open to the outside of the second casing 12, that is, are configured to have a slit shape. Instead, as illustrated in Fig. 6, the notches 24 and 25 may be grooves that penetrate the second casing 12 in the thickness direction of the second casing 12. Since the notches 24 and 25 configured in this manner are also disposed along the bonding section 26 that is positioned between the welded sections 14 of the accommodation chambers which are adjacent to each other, and penetrate the second casing 12 in the thickness direction of the second casing 12, and form a space directly facing the first casing 11 in the same manner as the notches 24 and 25 illustrated in Fig. 2 and Fig. 3, the notches 24 and 25 are exposed to the outside of the container 13. Furthermore, the notches 24 and 25 may be formed to have a portion which interconnect the notches in a width direction in the middle of the longitudinal direction.

In the examples illustrated in Fig. 2 to Fig. 5, the fuel cell system purifying apparatus is illustrated as an example in which the notches 24 and 25 are disposed in the second casing 12. However, the fuel cell system purifying apparatus is not limited thereto, and the notches 24 and 25 may be disposed in the first casing 11. Moreover, the notches 24 and 25 may be disposed in both of the first casing 11 and the second casing 12. Furthermore, in the fuel cell system purifying apparatus, one of the notches 24 and 25 may be disposed in the first casing 11, and the other may be disposed in the second casing 12.

As described above, the fuel cell system purifying apparatus according to the embodiment includes the container 13 that includes the first casing 11, the second casing 12, the plurality of accommodation chambers 15, 16, and 17 which are formed between the first casing 11 and the second casing 12 by bonding of the first casing 11 to the second casing 12, the communicating sections 18 and 19 through which one accommodation chamber communicates with another accommodation chamber, the guide inlet 20 which guides the fluid to flow into the inner portion of the accommodation chambers 15, 16, and 17, and the guide outlet 21 which guides the fluid in the inner portion to flow out, the purifying agent 22 that is accommodated within the accommodation chambers 15, 16, and 17, and purifies the fluid flowing through the accommodation chamber 15, 16, and 17, and the purifying path 23 where the fluid which is guided to flow into the purifying path 23 via the guide inlet 20 flows through till the fluid is guided to flow out from the guide outlet 21, in which the purifying path 23 is configured to be arranged to pass through the accommodation chambers 15, 16, and 17 and the communicating sections 18 and 19. Accordingly, it is possible to provide the fuel cell system purifying apparatus that can rectify the flow of the fluid which is purified by the purifying agent 22 without disposing a partition plate or a partition member which is a separate member from the container 13 accommodating the purifying agent 22. The simplification of the manufacturing is possible.

As described above, according to the fuel cell system purifying apparatus of the embodiment, in the accommodation chambers 15, 16, and 17, each of the inlets 15a, 16a, and 17a of the purifying path 23 within the accommodation chambers 15, 16, and 17 is disposed at one end of the accommodation chambers 15, 16, and 17, and each of the outlets 15b, 16b, and 17b of the purifying path 23 within the accommodation chambers 15, 16, and 17 is disposed at the other end of the accommodation chambers 15, 16, and 17. Accordingly, since the length of the purifying path 23 in the accommodation chambers 15, 16, and 17 may be prolonged up to the lengths of the accommodation chambers 15, 16, and 17 and the fluid passes through the chambers while being in contact with the purifying agent 22 which is accommodated in the accommodation chambers 15, 16, and 17, it is possible to effectively use the purifying agent 22.

As described above, according to the fuel cell system purifying apparatus of the embodiment, the container 13 includes the welded section 14 in order to bond the first casing 11 to the second casing 12, the welded section 14 is provided by welding the outer peripheries of the accommodation chambers 15, 16, and 17 and the communicating sections 18 and 19, and one casing of the first casing 11 and the second casing 12 is provided with the recessed sections 24 and 25 that are disposed along the welded section 14, and form a space directly facing the other casing of the first casing 11 and the second casing 12, between the welded sections 14 of the accommodation chambers which are adjacent to each other. Accordingly, since the welded section 14 is configured to be exposed to the outside of the container 13 by the recessed sections 24 and 25, it is possible to specify the spot of the bonding defect in the welded section 14 including the portions 14a4, 14b2, 14b4, and 14c2 that define the accommodation chambers which are adjacent to each other in the welded section 14.

As described above, according to the fuel cell system purifying apparatus of the embodiment, in the first casing 11 and the second casing 12, the one casing and the other casing are three-dimensionally formed into a predetermined shape, and the recessed sections 24 and 25 are grooves which penetrate the one casing in the thickness direction of the one casing. Accordingly, the first casing 11 and the second casing 12 may be easily formed by the press molding or the like.

As described above, according to the fuel cell system purifying apparatus of the embodiment, since the fluid is a fuel containing the odorant, and the purifying agent 22 is a desulfurizing agent that removes the odorant, it is possible to remove the impurities such as the odorants which are contained in the fuel.

As described above, according to the fuel cell system purifying apparatus of the embodiment, since the fluid is condensed water, and the purifying agent 22 is a water purification agent that promotes water purification by removing the impurities which are contained in the condensed water, it is possible to remove the impurities which are contained in the water.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Accordingly, it is expressly intended that all variations, changes and equivalents which fall within the scope of the present invention as defined in the claims, be embraced thereby.

## Claims

1. A fuel cell system purifying apparatus (10) comprising:
a container (13) that includes a first casing (11), a second casing (12), a plurality of accommodation chambers (15, 16, 17) which are formed between the first casing (11) and the second casing (12) by bonding of the first casing (11) to the second casing (12), a communicating section (18) through which one accommodation chamber (15) of the plurality of accommodation chambers (15, 16, 17) communicates with another accommodation chamber (16) of the plurality of accommodation chambers (15, 16, 17), a guide inlet (20) which guides a fluid to flow into an inner portion of the plurality of accommodation chambers (15, 16, 17), and a guide outlet (21) which guides the fluid in the inner portion to flow out;
a purifying agent (22) that is accommodated within the plurality of accommodation chambers (15, 16, 17), and purifies the fluid flowing through the plurality of accommodation chambers (15, 16, 17); and
a purifying path (23) where the fluid which is guided to flow into the purifying path (23) via the guide inlet (20) flows through till the fluid is guided to flow out via the guide outlet (21),
wherein the purifying path (23) is configured to be arranged to pass through the plurality of accommodation chambers (15, 16, 17) and the communicating section (18),
the container (13) includes welded sections (14) in order to bond the first casing (11) to the second casing (12), and
the welded sections (14) are provided by welding outer peripheries of the plurality of accommodation chambers (15, 16, 17) and of the communicating section (18),
**characterized in that**
one of the first casing (11) and the second casing (12) is provided with a recessed section (24, 25) that is disposed along the welded sections (14), and forms a space directly facing the other casing of the first casing (11) and the second casing (12), between the welded sections (14) of accommodation chambers (16, 17) of the plurality of accommodation chambers (15, 16, 17) which are adjacent to each other, and
the recessed section (24, 25) exposes a bonding section (26) that is positioned between the welding sections (14) of the accommodation chambers (16, 17) which are adjacent to each other to the outside of the container (13) throughout an entire periphery of the bonding section (26).

2. The fuel cell system purifying apparatus according to claim 1, wherein in each of the plurality of accommodation chambers (15, 16, 17), an inlet (15a, 16a, 17a) of the purifying path (23) within the accommodation chamber is disposed at one end of the accommodation chamber, and an outlet (15b, 16b, 17b) of the purifying path (23) within the accommodation chamber is disposed at the other end of the accommodation chamber.

3. The fuel cell system purifying apparatus according to claim 1 or 2,
wherein the one casing and the other casing are three-dimensionally formed into a predetermined shape, and
the recessed section (24, 25) is a groove which penetrates the one casing in a thickness direction of the one casing.

4. The fuel cell system purifying apparatus according to any one of claims 1 to 3,
wherein the purifying agent (22) is a desulfurizing agent that is capable of removing an odorant contained in a fuel.

5. The fuel cell system purifying apparatus according to any one of claims 1 to 3,
wherein the purifying agent is a water purification agent that is capable of promoting water purification by removing impurities which are contained in condensed water.

## Patentansprüche

1. Brennstoffzellensystem-Reinigungsvorrichtung (10) mit:
einem Behälter (13), der eine erste Ummantelung (11), eine zweite Ummantelung (12), eine Vielzahl von Unterbringungskammern (15, 16, 17), die zwischen der ersten Ummantelung (11) und der zweiten Ummantelung (12) durch Verbinden der ersten Ummantelung (11) mit der zweiten Ummantelung (12) ausgebildet sind, einen Verbindungsabschnitt (18), durch den eine Unterbringungskammer (15) der Vielzahl von Unterbringungskammern (15, 16, 17) mit einer anderen Unterbringungskammer (16) der Vielzahl von Unterbringungskammern (15, 16, 17) in Verbindung steht, einen Führungseinlass (20), der ein Fluid so führt, dass es in einen Innenabschnitt der Vielzahl von Unterbringungskammern (15, 16, 17) hineinströmt, und einen Führungsauslass (21) aufweist, der das Fluid im Innenabschnitt so führt, dass es herausströmt;
einem Reinigungsmittel (22), das innerhalb der Vielzahl von Unterbringungskammern (15, 16, 17) untergebracht ist und das Fluid reinigt, das durch die Vielzahl von Unterbringungskammern (15, 16, 17) strömt; und
einem Reinigungsweg (23), durch den das Fluid, das so geführt wird, dass es über den Führungseinlass (20) in den Reinigungsweg (23) hineinströmt, durchströmt, bis das Fluid so geführt wird, dass es über den Führungsauslass (21) herausströmt,
wobei der Reinigungsweg (23) konfiguriert ist, so angeordnet zu sein, dass er durch die Vielzahl von Unterbringungskammern (15, 16, 17) und den Verbindungsabschnitt (18) läuft,
der Behälter (13) Schweißabschnitte (14) aufweist, um die erste Ummantelung (11) mit der zweiten Ummantelung (12) zu verbinden, und
die Schweißabschnitte (14) durch Verschweißen von Außenrändern der Vielzahl der Unterbringungskammern (15, 16, 17) und des Verbindungsabschnitts (18) bereitgestellt sind,
**dadurch gekennzeichnet, dass**
zwischen den Schweißabschnitten (14) von Unterbringungskammern (16, 17) der Vielzahl von Unterbringungskammern (15, 16, 17), die aneinandergrenzen, eine von der ersten Ummantelung (11) und der zweiten Ummantelung (12) mit einem ausgesparten Abschnitt (24, 25) versehen ist, der entlang der Schweißabschnitte (14) angeordnet ist und einen Raum ausbildet, der der anderen Ummantelung von der ersten Ummantelung (11) und der zweiten Ummantelung (12) direkt zugewandt ist, und
der ausgesparte Abschnitt (24, 25) einen Verbindungsabschnitt (26), der zwischen den Schweißabschnitten (14) der Unterbringungskammern (16, 17), die aneinandergrenzen, positioniert ist, über einen gesamten Umfang des Verbindungsabschnitts (26) zur Außenseite des Behälters (13) freilegt.

2. Brennstoffzellensystem-Reinigungsvorrichtung nach Anspruch 1,
wobei in jeder der Vielzahl von Unterbringungskammern (15, 16, 17) an einem Ende der Unterbringungskammer ein Einlass (15a, 16a, 17a) des Reinigungswegs (23) innerhalb der Unterbringungskammer angeordnet ist und am anderen Ende der Unterbringungskammer ein Auslass (15b, 16b, 17b) des Reinigungswegs (23) innerhalb der Unterbringungskammer angeordnet ist.

3. Brennstoffzellensystem-Reinigungsvorrichtung nach Anspruch 1 oder 2,
wobei die eine Ummantelung und die andere Ummantelung dreidimensional in einer vorbestimmten Form ausgebildet sind und
der ausgesparte Abschnitt (24, 25) eine Nut ist, die die eine Ummantelung in einer Dickenrichtung der einen Ummantelung durchdringt.

4. Brennstoffzellensystem-Reinigungsvorrichtung nach einem der Ansprüche 1 bis 3,
wobei das Reinigungsmittel (22) ein Entschwefelungsmittel ist, das dazu imstande ist, einen Geruchsstoff zu entfernen, der in einem Brennstoff enthalten ist.

5. Brennstoffzellensystem-Reinigungsvorrichtung nach einem der Ansprüche 1 bis 3,
wobei das Reinigungsmittel ein Wasserreinigungsmittel ist, das dazu imstande ist, eine Wasserreinigung zu fördern, indem es Verunreinigungen entfernt, die in Kondenswasser enthalten sind.

## Revendications

1. Appareil de purification de système de pile à combustible (10), comprenant :
un conteneur (13) qui comprend un premier boîtier (11), un second boîtier (12), une pluralité de chambres de logement (15, 16, 17) formées entre le premier boîtier (11) et le second boîtier (12) par liaison du premier boîtier (11) au second boîtier (12), une section de communication (18) à travers laquelle une chambre de logement (15) de la pluralité de chambres de logement (15, 16, 17) communique avec une autre chambre de logement (16) de la pluralité de chambres de logement (15, 16, 17), un orifice d'entrée de guidage (20) qui guide un fluide pour qu'il s'écoule à l'intérieur d'une partie interne de la pluralité de chambres de logement (15, 16, 17), et un orifice de sortie (21) qui guide le fluide dans la partie interne pour qu'il s'écoule vers l'extérieur ;
un agent de purification (22) qui est reçu à l'intérieur de la pluralité des chambres de logement (15, 16, 17) et qui purifie le fluide s'écoulant à travers la pluralité des chambres de logement (15, 16, 17) ; et
un chemin de purification (23) où le fluide, qui est guidé de façon à s'écouler à l'intérieur du chemin de purification (23) par l'intermédiaire de l'orifice d'entrée de guidage (20), s'écoule jusqu'à ce que le fluide soit guidé pour qu'il s'écoule vers l'extérieur par l'intermédiaire de l'orifice de sortie de guidage (21),
dans lequel le chemin de purification (23) est configuré de façon à être disposé pour traverser la pluralité de chambres de logement (15, 16, 17) et la section de communication (18),
le conteneur (13) comprend des sections soudées (14) afin de lier le premier boîtier (11) au second boîtier (12), et
les sections soudées (14) sont fournies en soudant des périphéries externes de la pluralité des chambres de logement (15, 16, 17) et de la section de communication (18), **caractérisé en ce que**
l'un du premier boîtier (11) et du second boîtier (12) est pourvu d'une section en renfoncement (24, 25) qui est disposée le long des sections soudées (14) et forme un espace se présentant directement en face de l'autre boîtier du premier boîtier (11) et du second boîtier (12), entre les sections soudées (14) des chambres de logement (16, 17) de la pluralité de chambres de logement (15, 16, 17) qui sont adjacentes les unes par rapport aux autres, et
la section en renfoncement (24, 25) expose une section de liaison (26) qui est positionnée entre les sections soudées (14) des chambres de logement (16, 17) qui sont adjacentes les unes par rapport aux autres à l'extérieur du conteneur (13) tout au long d'une périphérie complète de la section de liaison (26).

2. Appareil de purification de système de pile à combustible selon la revendication 1,
dans lequel, dans chacune des chambres de logement (15, 16, 17), un orifice d'entrée (15a, 16a, 17a) du chemin de purification (23) à l'intérieur de la chambre de logement est disposé au niveau d'une extrémité de la chambre de logement, et un orifice de sortie (15b, 16b, 17b) du chemin de purification (23) à l'intérieur de la chambre de logement est agencé au niveau de l'autre extrémité de la chambre de logement.

3. Appareil de purification de système de pile à combustible selon la revendication 1 ou 2,
dans lequel le boîtier et l'autre boîtier sont formés en trois dimensions en une forme prédéterminée, et
la section en renfoncement (24, 25) est une rainure qui pénètre l'un des boîtiers dans le sens de l'épaisseur du boîtier.

4. Appareil de purification de système de pile à combustible selon l'une quelconque des revendication 1 à 3,
dans lequel l'agent de purification (22) est un agent désulfurant capable d'éliminer un odorant contenu dans un combustible.

5. Appareil de purification de système de pile à combustible selon l'une quelconque des revendications 1 à 3,
dans lequel l'agent de purification est un agent de purification d'eau capable de promouvoir la purification de l'eau en éliminant des impuretés qui sont contenues dans de l'eau condensée.
